# EUROPEAN PATENT APPLICATION

(11) **EP 3 613 551 A1**
(43) Date of publication of application: **26.02.2020**
(21) Application number: 18190789.0
(22) Date of filing: 24.08.2018
(51) Int. Cl.: B29C 45/00, H04M 1/02, G06F 1/16, B29L 31/34

(54) **METHOD OF MAKING A PORTABLE ELECTRONIC DEVICE WITH SHAPED SIDE WALL**

(71) Applicant: SABIC Global Technologies B.V., 4612 PX Bergen op Zoom (NL)
(72) Inventor: HOCKER, Thomas, Houston, TX 77042 (US); MCCANN, John Gillespie, Houston, TX 77042 (US); LAWRENCE, Stanley, Houston, TX 77042 (US); KULKARNI, Sandeep, 6167 RD Geleen (NL)
(74) Representative: Balder IP Law, S.L.

(57) **Abstract**

A method of making a portable electronic device is disclosed. An open housing (12) is formed with a back (14) and a side wall (30, 42), including injection molding a thermoplastic polymer composition to form a side wall template, or to form a back template, or to form both a side wall template and a back template. A portion of the side wall template can be removed to form the side wall, or a portion of the back template can be removed to form the back, or a portion of the side wall template can be removed to form the side wall and a portion of the back template can be removed to form the back, thereby reducing a thickness of either or both of the side wall template or back template.

## Description

### BACKGROUND

Portable electronic devices such as mobile phones and tablets have been adopted for widespread use around the world. Mobile phones as well as other electronic communication devices typically are encased in housings. There are specifications for portable electronic device housings, including specifications such as weight, rigidity or stiffness, strength, impact resistance, or compatibility with electronic, operator interface, or other functional requirements of the portable electronic device. Current technologies do not always adequately meet all desired specifications, and there continues to be a desire for new approaches.

### BRIEF DESCRIPTION

A method of making a portable electronic device is disclosed herein. According to the method, an open housing is formed comprising a back and a side wall, including injection molding a thermoplastic polymer composition to form a side wall template, or to form a back template, or to form both a side wall template and a back template. A portion of the side wall template can be removed to form the side wall, or a portion of the back template can be removed to form the back, or a portion of the side wall template can be removed to form the side wall and a portion of the back template can be removed to form the back. A first thickness of the side wall of the side wall template at a location along the side wall template is thereby reduced, or a second thickness is reduced at a location on the back template, or both the first and second thicknesses can be reduced. An electronic component is disposed in the open housing, and a cover is engaged with the side wall to enclose the electronic component in the housing.

Also disclosed is a method of making a housing. According to the method, an open housing is formed including a back and a side wall. The method includes: injection molding a thermoplastic polymer composition to form an injection molded side wall template with a first thickness at a location along the side wall of less than 7 mm; or injection molding a thermoplastic polymer composition to form an injection molded back template with a second thickness at a location along the back of less than 4 mm; or injection molding a thermoplastic polymer composition to form an injection molded side wall template with a first thickness at a location along the side wall of less than 7 mm, and to form an injection molded back template with a second thickness at a location along the back of less than 4 mm. A portion of the side wall template is removed to reduce the first thickness by at least 5%, or a portion of the back template is removed to reduce the second thickness by at least 5%, or a portion of the side wall template is removed and a portion of the back template is removed to reduce each of the first thickness and the second thickness by at least 5%.

The above described and other features are exemplified by the following figures and detailed description.

### BRIEF DESCRIPTION OF THE DRAWINGS

The following figures are exemplary embodiments wherein the like elements are numbered alike.
FIG. 1 is an exploded isometric view of a schematically-represented portable electronic component and the assembly thereof.
FIG. 2 schematically shows an isometric view of an outer side wall member and housing back disposed in a mold.
FIG. 3 schematically shows injection of a fluid thermoplastic composition into a mold.
FIG. 4 schematically shows an isometric view of a housing back and a unitary outer side wall member such as a metal outer side wall member on a five-sided housing.
FIG. 5 schematically shows an isometric view of a housing back and outer side wall end members such as metal outer side wall end members and outer side wall side members such as polymeric outer side wall members on a five-sided housing.
FIG. 6 schematically shows a cross-sectional view of outer side wall member and housing back inserts in a mold.
FIG. 7 schematically shows a cross-sectional view of the filled mold at the cross-section of FIG. 6.
FIG. 8 schematically shows a housing back and side wall at the cross-section of FIG. 6.
FIG. 9 schematically shows the housing back and side wall from FIG. 8 before and after shaping a side wall template.
FIG. 10 schematically shows an injection molded housing back molded to an outer side wall member before and after shaping a side wall template.
FIG. 11 schematically shows an injection molded housing back and side wall before and after shaping a side wall template.
FIG. 12 schematically shows an injection molded housing back and side wall before and after shaping a side wall template and a back template.

### DETAILED DESCRIPTION

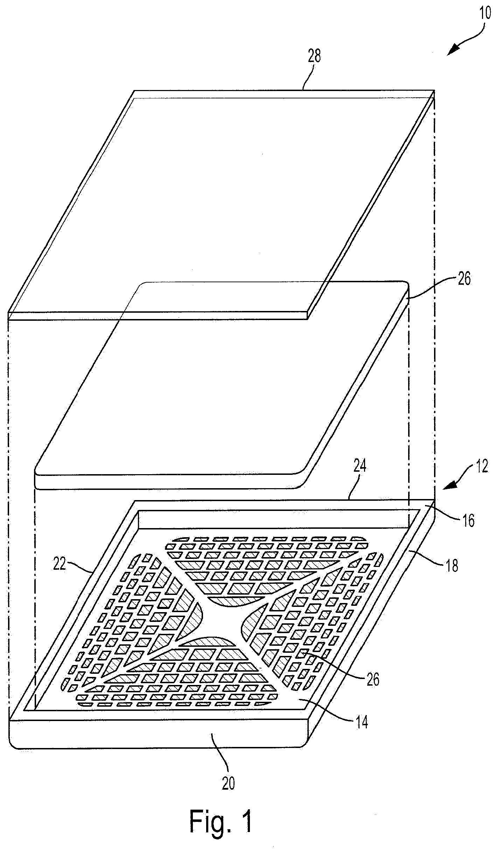

With reference to the Figures, FIG. 1 is an exploded isometric view of a schematically-represented portable or handheld electronic device 10 and the assembly thereof. As shown in FIG. 1, a housing 12 includes a housing back 14 and an attached side wall 16. The housing 12 shown in FIG. 1 can be characterized as an open five-sided housing with the housing back 14 as one side and four side wall sections 18, 20, 22, and 24 as the other four sides. In some embodiments, the housing back 14 can include various channels, cut-outs, or vias to accommodate electronic or other components (e.g., antennas, speakers, microphones, electrical connectors) of the portable electronic device 10. As further shown in the exploded view of FIG. 1, the portable electronic device can be assembled by disposing an electronic component 26 in the open housing 12, and engaging a cover 28 with the side wall 16 to enclose the electronic component 26.

The electronic component 26 can be any type of electronic component for a portable or handheld electronic device. Examples of electronic components include, but are not limited to a main logic board, processors (e.g., one or more CPUs, microcontrollers, field effect gate arrays, or other types of processors), system memory, data storage devices (e.g., solid state or hard drive), speakers, wireless modems, antennas, batteries, etc. A single electronic component or multiple electronic components integrated into a single module can be disposed in the open housing 12 as shown schematically in FIG. 1, or multiple electronic components can be separately disposed in the open housing 12 and assembled in place. The electronic component 26 can be attached or secured in place in the housing to an optional support structure (not shown) with fasteners such as screws, clips, or rivets, or with an adhesive such as a curable polymer adhesive. The cover 28 can be formed from any material such as plastic, metal, or glass, and in some embodiments cover 28 can be a clear glass or plastic cover through which an electronic display (as an electronic component 26) can be viewed. The cover 28 can be engaged or attached to the housing 12 with fasteners such as screws, clips, or rivets, or with an adhesive such as a curable polymer adhesive.

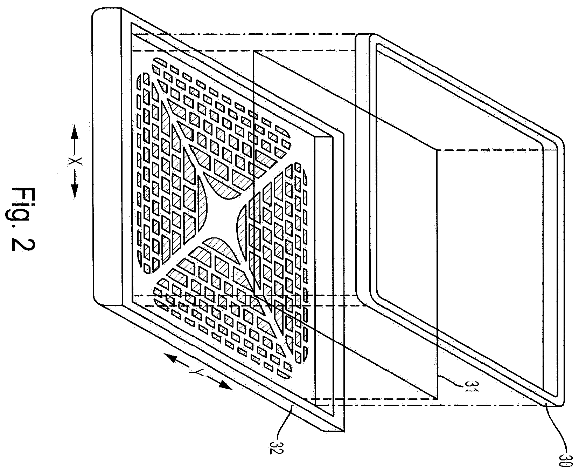

The fabrication and configuration of the housing 12 is described in further detail below. In some embodiments, the housing 12 can include a laminate composite back and an outer side wall member. FIG. 2 schematically shows a part of the fabrication process in an exploded view. As shown in FIG. 2, an outer rim in the form of outer side wall member 30 and a laminate composite housing back 31 is disposed in a mold 32. In some embodiments, a thickness of the laminate composite housing back 31 can be in a range with a lower end of 0.65 mm, 0.8 mm, or 1.0 mm, and an upper end of 1.5 mm, 2.0 mm, or 2.5 mm. These range endpoints can be independently combined to form a number of different ranges, and all ranges represented by each possible combination are hereby expressly disclosed (i.e., 0.65-1.5 mm, 0.65-2.0 mm, 0.65-2.5 mm, 0.8-1.5 mm, 0.8-2.0 mm, 0.8-2.5 mm, 1.0-1.5 mm, 1.0-2.0 mm, and 1.0-2.5 mm). Each possible range for the above-disclosed endpoints is recited above by way of example; however, the skilled person can envisage each such range for other similarly disclosed ranges herein without the need for explicit recitation of each such range. Thickness of a housing back or back template and also reductions in thickness discussed herein can be determined at any location through the back or back template along a direction perpendicular to a plane of extension of the back or back template. By way of example, the plane of extension of the flat housing back 14 is coincident with the back 14. In some embodiments, a thickness of the side wall member 30 can be in a range with a lower end of 0.65 mm, 0.8 mm, or 1.2 mm, and an upper end of 1.8 mm, 2.2 mm, or 3.7 mm. These range endpoints can be independently combined to form a number of different ranges, and all ranges represented by each possible combination are hereby expressly disclosed. Thickness of a side wall or side wall template and also reductions in thickness discussed herein can be determined at any location through the side wall or side wall template along a direction perpendicular to a direction of extension of the side wall template. By way of example, a direction of extension for the side walls 20/24 is labeled as X in FIG. 2, and a direction of extension for the side walls 18/22 is labeled as Y in FIG 2.

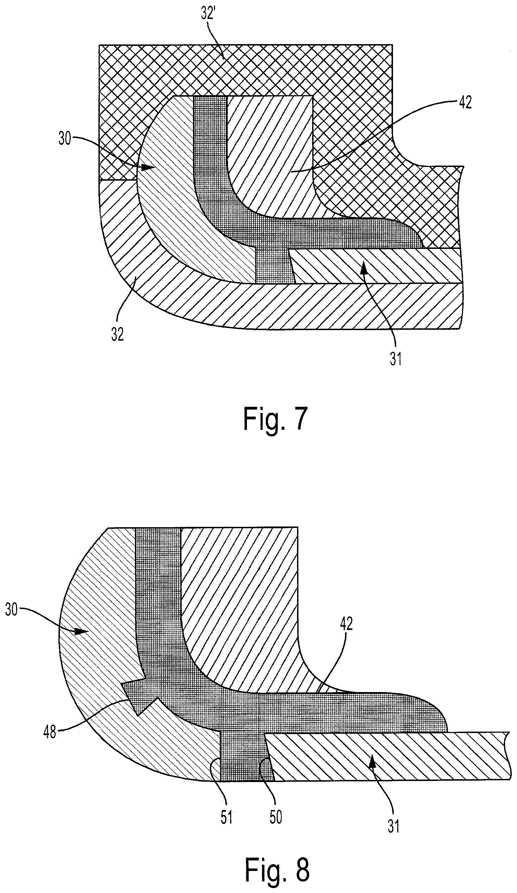

The outer side wall member 30 can be made from various materials. It should be noted here that although FIG. 2 shows a unitary contiguous outer side wall member 30, other example embodiments such as the embodiment of FIG. 7 described in detail below include multiple outer side wall members. It should be understood that unless explicitly stated otherwise, any reference herein to an outer side wall member can include an outer side wall member that extends along less than the entirety of the electronic device periphery.

In some embodiments, the outer side wall member can include a structure formed of a material to promote structural integrity of the housing 12, referred to herein as a "structural material". In some embodiments, the structural material can include a metal. Examples of metals include but are not limited to aluminum, titanium, or stainless steel. In some embodiments, the structural material can include a composite material comprising resin and fiber. In some embodiments, the fiber can be aligned, or can be continuous, or can be both aligned and continuous. For example, in some embodiments, the outer side wall member can include a composite structure comprising resin and continuous fiber, also known as a continuous fiber composite. In some embodiments, continuous fiber reinforcement can provide a fiber content of at least 50% by volume based on the total volume of the composite material. In some embodiments, the fibers are aligned or continuous along the entirety of the length of the outer side wall member. In some embodiments, the fibers are continuous along the length of a side of a five-sided open housing such as the housing 12. In some embodiments, the fibers can be aligned in a single direction such as along the length of the outer side wall member. In some embodiments, the continuous fibers can be oriented in multiple directions such as a bidirectional weave (e.g., a 0-90 degree fabric), a tri-directional weave, a non-woven mesh, or in a wound configuration.

In some embodiments, alignment of non-continuous short fibers (e.g., fiber lengths in the part of 0.2 mm to 1 mm), or in some embodiments long fibers (e.g., fiber length of 0.5 mm to 2.5 mm), can be achieved by injection molding with techniques including optimized mold design and molding processing parameters. In some embodiments, longer fiber length in the part or fiber alignment in the injection molded side wall members can be promoted by injection molding the parts larger than the shape of the final side wall member, and then removing excess material to achieve the final shape, as disclosed herein. Other types of materials can be used for the outer side wall members, including but not limited to injected molded thermoplastic compositions with or without reinforcing fibers such as chopped fibers.

Various materials can be used for fibers in a structural material for an outer side wall member such as outer side wall member 30. In some embodiments, a structural material is reinforced with carbon fibers or aramid fibers. Other materials for fibers used for the composite outer side wall members can include any of the materials for fibers described below for the injection molded thermoplastic composition. Although conductive fibers can be used, in some embodiments, the fibers are non-conductive and transparent to electromagnetic radiation in at least a portion of the outer side wall member, such as a portion of the housing covering a wireless charging port or an antenna. Polymers for composite outer side wall members can include any of the polymers described below for the laminate composite housing back. In some embodiments, the outer side wall member can exhibit targeted properties such as enhanced flexural strength and impact resistance. In some embodiments, a surface of the outer side wall member to which the thermoplastic composition is molded can include a surface treatment to enhance contact and adhesion of the thermoplastic composition to the outer side wall member. Examples of surface treatments include surface etching with mechanical or chemical etching agents, application of polymer adhesives that are compatible with thermoplastic polymer resin, plasma treatment, or laser engraving.

The laminate composite housing back can be made by laminating a plurality of fiber sheets and resin. The resin used can be any of the thermoplastic polymer resins described below for the injection molded connector member, as well as thermoset polymers such as epoxy resins or thermoset polyurethanes. The resin can be pre-impregnated into the fiber sheets (i.e., prepreg sheets) or can be infused into the sheets, depending on the fabrication technique that is used. Fiber sheets can be woven or non-woven, continuous or discontinuous, with fibers that are aligned or not aligned. In some embodiments, the fibers can be aligned, or can be continuous, or can be both aligned and continuous. The amount of fiber can vary depending on the target properties of the housing. In some embodiments, the fiber is present in laminate composite housing back in an amount in a range with a low end of 10%, 20%, or 35%, and an upper end of 40%, 50%, or 65%, with the percentages expressed as volume percentage based on the total volume of the thermoplastic composition. These range endpoints can be independently combined to form a number of different ranges, and all ranges represented by each possible combination are hereby expressly disclosed. Although conductive fibers can be used, in some embodiments, the fibers are non-conductive and transparent to electromagnetic radiation in at least a portion of the housing, such as a portion of the housing covering a wireless charging port or an antenna. The fibers can include fibrous non-conductive fillers used in polymeric resins to impart improved properties to polymeric composites and having an aspect ratio greater than 1. Such fillers may exist in the form of whiskers, needles, rods, tubes, strands, elongated platelets, lamellar platelets, ellipsoids, micro fibers, nanofibers and nanotubes, elongated fullerenes, and the like. Where such fillers exist in aggregate form, an aggregate having an aspect ratio greater than 1 will also suffice for the purpose of this invention. Examples of such fillers well known in the art include those described in "Plastic Additives Handbook, 5th Edition" Hans Zweifel, Ed, Carl Hanser Verlag Publishers, Munich, 2001. Non-limiting examples of fibrous fillers include glass fibers, basalt fibers, including textile glass fibers and quartz. Other fibrous fillers can also be used, such as short inorganic fibers, including processed mineral fibers such as those derived from blends comprising at least one of aluminum silicates, aluminum oxides, magnesium oxides, and calcium sulfate hemihydrate, boron fibers, ceramic fibers such as silicon carbide, and fibers from mixed oxides of aluminum, boron and silicon. Also included among fibrous fillers are single crystal fibers or "whiskers" including silicon carbide, alumina, boron carbide, iron, nickel, copper. In addition, organic reinforcing fibrous fillers and synthetic reinforcing fibers may be used in the present invention. This includes organic polymers capable of forming fibers such as polyethylene terephthalate, polybutylene terephthalate and other polyesters, polyarylates, polyethylene, polyvinylalcohol, polytetrafluoroethylene, acrylic resins, high tenacity fibers with high thermal stability including aromatic polyamides, polyaramid fibers, polybenzimidazole, polyimide fibers such as polyimide 2080 and PBZ fiber; and polyphenylene sulfide, polyether ether ketone, polyimide, polybenzoxazole, aromatic polyimides or polyetherimides, and the like. Combinations of any of the foregoing fibers may also be used.

In some embodiments, glass fibers can be used as non-conductive fibrous fillers. Examples of glass fibers can be include any type of glass fiber, and include those prepared from glass compositions commonly known as "E-glass," "A-glass," "C-glass," "D-glass," "R-glass," "S-glass," as well as E-glass derivatives that are fluorine-free and/or boron-free. Commercially produced glass fibers generally having nominal filament diameters of about 4.0 to about 35.0 micrometers, and most commonly produced E-glass fibers having nominal filament diameters of about 9.0 to about 30.0 micrometers can be included in the thermoplastic composition. The fibers can be made by standard processes, e.g., by steam or air blowing, flame blowing and mechanical pulling. Use of non-round fiber cross section is also possible. The glass fibers can be sized or unsized. Sized glass fibers are conventionally coated on at least a portion of their surfaces with a sizing composition selected for compatibility with the polymeric matrix material. The sizing composition can facilitate wet-out and wet-through of the matrix material upon the fiber strands and assists in attaining desired physical properties in the composite.

In some embodiments, the fibers are glass strands that have been sized. In preparing the glass fibers, a number of filaments can be formed simultaneously, sized with the coating agent and then bundled into what is called a strand. Alternatively the strand itself may be first formed of filaments and then sized. The amount of sizing employed can generally be an amount that is sufficient to bind the glass filaments into a continuous strand and ranges from about 0.1 to about 5 wt.%, and more typically ranges from about 0.1 to 2 wt.% based on the weight of the glass fibers. Generally, this can be about 1.0 wt.% based on the weight of the glass filament.

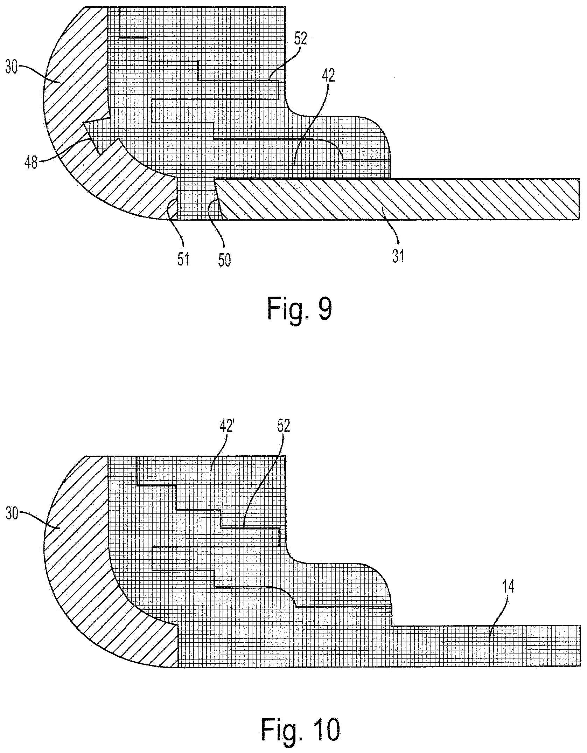

The laminate composite housing back can be formed using a variety of techniques, including but not limited to bladder molding of pre-preg sheets, compression molding of pre-preg sheets, autoclave or vacuum bag molding of prepreg sheets, mandrel molding, wet layup molding of neat sheets, filament winding molding in which fiber bundles are pulled through a wet bath resin and wound over a mandrel, pultrusion or extrusion molding in which fibers saturated with wet resin are pulled or extruded through a die, or resin transfer molding and vacuum assisted resin transfer molding in which fabrics are placed into a mold and injected with fluid resin under pressure. In some embodiments, the laminate composite housing back can be flat. In some embodiments, the laminate composite housing back can be shaped such as with an upturned peripheral portion as shown in FIG. 9 discussed below.

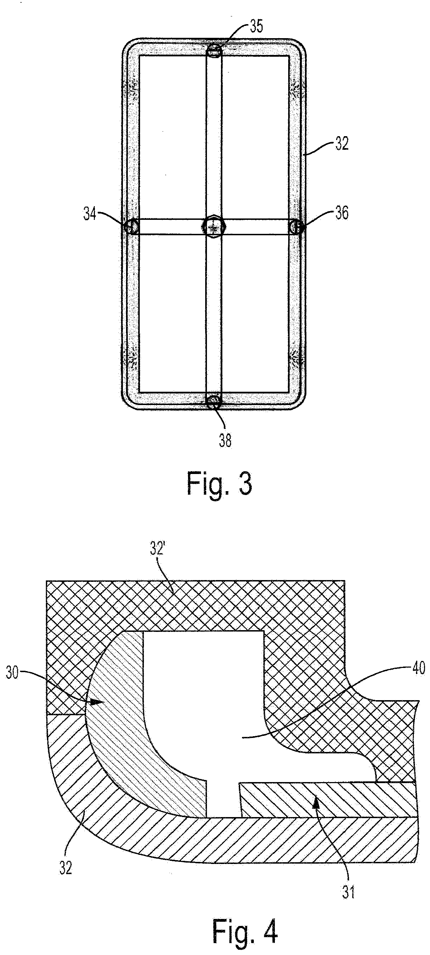

After the outer side wall member and laminate composite back is disposed in the mold, for example as shown in FIG. 2 with the outer side wall member 30 and laminate composite back 31 disposed in the mold 32, the mold can be closed with an upper mold section (32' FIG. 4) followed by injection of a fluid thermoplastic composition into the mold. Thermoplastic polymer resins include but are not limited to oligomers, polymers, ionomers, dendrimers, copolymers such as graft copolymers, block copolymers (e.g., star block copolymers, random copolymers, etc.) and combinations including at least one of the foregoing. Examples of such polymeric resins include, but are not limited to, polycarbonates (e.g., blends of polycarbonate (such as, polycarbonate-polybutadiene blends, copolyester polycarbonates)), polystyrenes (e.g., copolymers of polycarbonate and styrene, polyphenylene ether-polystyrene blends), polyimides (e.g., polyetherimides), acrylonitrile-styrene-butadiene (ABS), polyalkylmethacrylates (e.g., polymethylmethacrylates), polyesters (e.g., copolyesters, polythioesters), polyolefins (e.g., polypropylenes and polyethylenes, high density polyethylenes, low density polyethylenes, linear low density polyethylenes), polyamides (e.g., polyamideimides), polyarylates, polysulfones (e.g., polyarylsulfones, polysulfonamides), polyphenylene sulfides, polytetrafluoroethylenes, polyethers (e.g., polyether ketones, polyether etherketones, polyethersulfones), polyacrylics, polyacetals, polybenzoxazoles (e.g., polybenzothiazinophenothiazines, polybenzothiazoles), polyoxadiazoles, polypyrazinoquinoxalines, polypyromellitimides, polyquinoxalines, polybenzimidazoles, polyoxindoles, polyoxoisoindolines (e.g., polydioxoisoindolines), polytriazines, polypyridazines, polypiperazines, polypyridines, polypiperidines, polytriazoles, polypyrazoles, polypyrrolidines, polycarboranes, polyoxabicyclononanes, polydibenzofurans, polyphthalides, polyacetals, polyanhydrides, polyvinyls (e.g., polyvinyl ethers, polyvinyl thioethers, polyvinyl alcohols, polyvinyl ketones, polyvinyl halides, polyvinyl nitriles, polyvinyl esters, polyvinylchlorides), polysulfonates, polysulfides, polyureas, polyphosphazenes, polysilazzanes, polysiloxanes, and combinations including at least one of the foregoing.

More particularly, the injection molded polymer can include, but is not limited to, polycarbonate resins (e.g., LEXAN™ resins, commercially available from SABIC such as LEXAN™ XHT, LEXAN™ HFD, etc.), polyphenylene ether-polystyrene blends (e.g., NORYL™ resins, commercially available from SABIC), polyetherimide resins (e.g., ULTEM™ resins, commercially available from SABIC), polybutylene terephthalate-polycarbonate blends (e.g., XENOY™ resins, commercially available from SABIC), copolyestercarbonate resins (e.g. LEXAN™ SLX or LEXAN™ FST resins, commercially available from SABIC), acrylonitrile butadiene styrene resins (e.g., CYCOLOY resins, commercially available from SABIC), polyetherimide/siloxane resins (e.g., SILTEM™, commercially available from SABIC), polypropylene resins, for example, long glass fiber filled polypropylene resins (e.g., STAMAX™ resins, commercially available from SABIC), and combinations including at least one of the foregoing resins. In some embodiments, the polymeric resins can include, but are not limited to, homopolymers and copolymers of a polycarbonate, a polyester, a polyacrylate, a polyamide, a polyetherimide, a polyphenylene ether, or a combination including at least one of the foregoing resins. The polycarbonate can include copolymers of polycarbonate (e.g., polycarbonate-polysiloxane, such as polycarbonate-polysiloxane block copolymer), linear polycarbonate, branched polycarbonate, end-capped polycarbonate (e.g., nitrile end-capped polycarbonate) blends of PC, such as PC/ABS blend, and combinations including at least one of the foregoing, for example a combination of branched and linear polycarbonate.

In addition to thermoplastic polymer resin, the thermoplastic composition can include chopped fiber (for which reference is made to the description above of chopped fibers for injection molded outer side wall members) or various additives. The amount of fiber can vary depending on the target properties of the housing. In some embodiments, the fiber is present in the thermoplastic composition in an amount in a range with a low end of 10 wt.%, 20 wt.%, or 30 wt.%, and an upper end of 40 wt.%, 50 wt.%, or 60 wt.% based on the total weight of the thermoplastic composition. Reference is also made to the description above of chopped fibers for injection molded outer side wall members. An additive composition can be used, comprising one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble or non-soluble in the thermoplastic polymer. The additive composition can include an impact modifier, flow modifier, non-fiber filler (e.g., a particulate polytetrafluoroethylene (PTFE), glass, carbon, mineral, or metal), antioxidant, heat stabilizer, light stabilizer, ultraviolet (UV) light stabilizer, UV absorbing additive, plasticizer, lubricant, release agent (such as a mold release agent), adhesion promoter, antistatic agent, anti-fog agent, antimicrobial agent, colorant (e.g, a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

In some embodiments for which the thermoplastic composition includes fiber, powdered thermoplastic polymer can be blended with chopped fibers in a mixer such as a Henschel high speed mixer. Other low shear processes including but not limited to hand mixing can also accomplish this blending. The blend of powdered polymer and chopped fibers can fed to an extruder through a hopper. Alternately, the glass can be incorporated into the composition by feeding unchopped fiber directly into the extruder. The dispersed glass fibers may be reduced in length as a result of the shearing action on the glass strands in the extruder barrel or during shearing action during injection molding. The fibers can also be compounded into a masterbatch with a desired polymeric resin and fed into the extruder. The extruder is generally operated at a temperature higher than that necessary to cause the polymeric resin to flow. The extrudate can be quenched in a water batch and pelletized.

The thermoplastic composition can be introduced to an injection molding machine where it is heated to a fluid form and injected, for example with a screw and barrel injection device, into a mold with the outer side wall member inserts disposed therein. FIG. 3 schematically shows a configuration for introduction of the thermoplastic composition to the mold. FIG. 3 shows the mold 32 equipped with four drops 34, 35, 36, and 38 for delivering the fluid thermoplastic composition to the mold 32. Additional drops can be added to meet lower wall thicknesses. Multiple drops can be activated concurrently or sequentially. Sequential activation can eliminate multiple flow fronts that can cause weak spots where they meet.

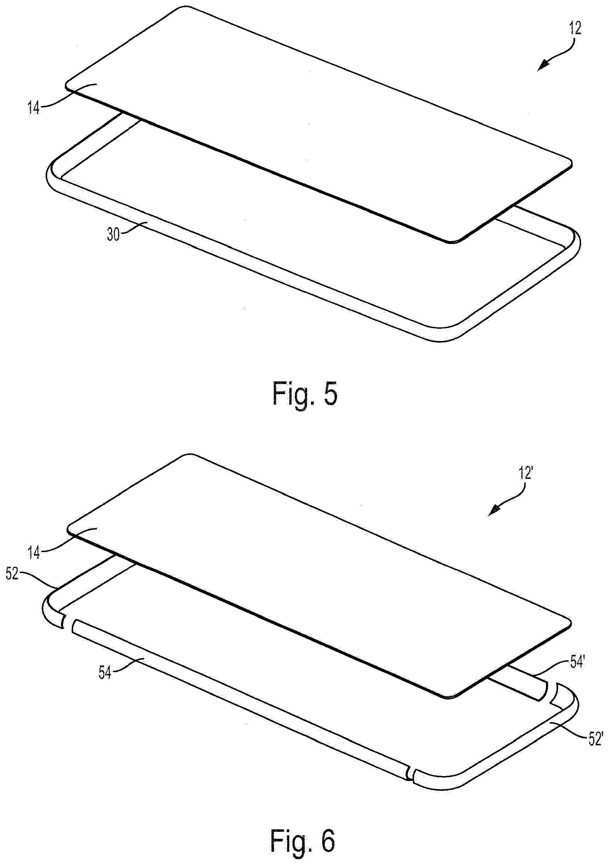

As mentioned above, a side wall of a portable or handheld electronic as disclosed herein can include a single unitary outer side wall member 30 as shown in FIG. 2, or a plurality of outer side wall members. FIG. 4 schematically shows the housing 12 with a unitary contiguous outer side wall member 30, which can be formed from a structural material such as a metal. For ease of illustration, the housing 12 and outer side wall member 30 are shown in exploded view. However, other configurations are also contemplated. FIG. 5 schematically shows an outer side wall member configuration for a five-sided rectangular-shaped housing 12' in which outer side wall members 52 and 52' are disposed on shorter end edge sections the housing 12', and outer side wall members 54 and 54' are disposed on the longer side edge sections of the housing 12'. In some embodiments, the end-disposed outer side wall members 52/52' can be formed from a structural material such as a metal. In some embodiments, the structural material outer side wall members 52/52' can extend to cover one or more of the housing corners, including all four corners as shown in FIG. 5. In some embodiments, the side-disposed outer side wall members 54/54' can be formed from a polymeric material, such as a polymeric structural material (e.g., continuous fiber composite) or other polymeric materials such as an injection molded thermoplastic. Other variations are also contemplated. For example, in some embodiments (not shown), the longer side-disposed outer side wall members 54/54' can be formed from a structural material such as a metal (and can also extend to cover one or more of the housing corners), and the shorter end-disposed side wall members 52/52' can be formed from a polymeric material such as a polymeric structural material (e.g., continuous fiber composite) or other polymeric materials such as an injection molded thermoplastic. Additionally, although the outer side wall members disclosed herein have been shown with a more or less uniform thickness, the thickness can be varied, for example by providing thicker sections in likely impact zones and thinner sections elsewhere along the side wall.

FIG. 6 schematically shows a cross-section view of the outer side wall member 30 and laminate composite housing back 31 disposed in the cavity 40 of mold 32 enclosed by upper mold section 32'. FIG. 7 shows the view at the cross-section of FIG. 6 with the cavity filled by thermoplastic polymer to form a connector member and side wall template 42, and FIG. 8 shows the schematic cross-sectional view of the side wall template 42 after the thermoplastic composition has solidified and the device has been removed from the mold. As further shown in FIG. 8, the outer side wall member 30 can include features such as machined features to provide undercut features such as 48 to promote adhesion of the injection molded side wall template member 42 and the outer side wall member 30. In some embodiments, these features on the outer side wall member 30 can be recessed as shown with feature 48 or they can be proud (i.e., protruding). Another optional feature shown in FIG. 8 includes an angled surface 50 of the laminate composite housing back to provide an interlocking retention feature with overmolded thermoplastic resin. Although not shown, a similar angled configuration can be utilized on the surface 51 of the outer side wall member 30.

As mentioned above, a portion of the side wall template 42 or of a back wall template can be removed to reduce a thickness at a location along the side wall template. Removal of side wall template material can be accomplished with machining techniques including but not limited to lathing, milling, routing, or grinding. The side wall template 42 or back template can be subjected to multiple passes using any one or combination of the above techniques. The amount of material removed, and the resulting reduction in thickness can be varied along the length of the side wall, and the shape or profile of the final side wall can also be varied along the length of the side wall. Various cutting materials can be used, including but not limited to silicon carbide or high strength steel. Various cutting tool configurations can be used including but not limited to single flute configurations, dual flute configurations, straight flutes, spiral flutes, or multiple flute configurations.

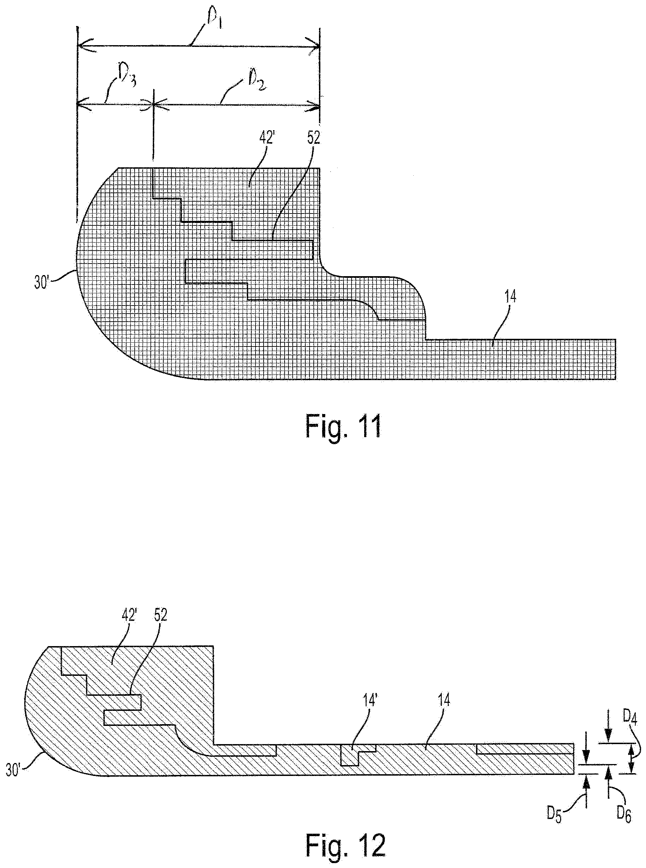

Example embodiments of a profile of removed material from a side wall template are schematically shown in the cross-sectional views of FIGS. 9-12. FIG. 9 shows the cross-sectional view of FIG. 8 with a cutting taken along cutting profile 52. The same cutting profile is shown in FIGS. 10 and 11. FIG. 10 shows a cross-sectional view of a side wall of an electronic device housing in which an injection molded housing back 14 and side wall template 42' are molded to the outer side wall member 30. The side wall template 42' can be distinguished from the housing back 14 as a portion along the perimeter of the housing back elevated above the housing back or that has an unobstructed line of sight view of a side wall template on an opposite perimeter of the housing back. Further description of the FIG. 10 and the fabrication of the structure shown can be found in U.S. patent application Serial No. 62/655,790, entitled "Portable Electronic Device with Injection Molded Back and Method of Manufacture", filed on April 10, 2018, the disclosure of which is incorporated herein by reference in its entirety. FIG. 11 shows a cross-sectional view of a side wall of an electronic device housing in which the housing back 14 and side wall template 42' are injection molded out to the outer side wall surface 30', the disclosure of which is incorporated herein by reference in its entirety. FIG. 12 shows a cross-sectional view of a side wall and back section of an electronic device housing in which material is removed along profile 52 from a side wall template 42' and a back template 14'.

As mentioned above, the removal of material from the side wall template or back template reduces a thickness through the side wall template along a direction perpendicular to a direction of extension of the side wall (or in the case of a curved side wall, along a direction perpendicular to a tangent of the side wall outer edge along the direction of extension of the side wall). It will be appreciated that in FIGS. 9-12 that the direction of side wall extension extends into and out of the page and directions through the side wall that are perpendicular to the direction of side wall extension lie along a plane that is coincident with the page. Accordingly, there can be a wide range of possible directions (theoretically up to a full 360°) through the side wall along the plane coincident with the page, and the direction for determination of a thickness reduction of the side wall template can be taken in any direction in that plane. In some embodiments, a direction for determining a thickness reduction of the side wall template can be parallel to the housing back 14 (i.e., horizontal). A reduction in thickness of a housing template can be determined along a direction perpendicular to a plane of housing back extension, which would be a plane parallel to the back surface for a flat back or a plane tangent to the back surface for a curved back. The profile 52 as shown includes a number of surfaces that are parallel to the housing back 14', and in some embodiments, the machined portion of the side wall includes at least one surface parallel to the housing back 14 (i.e., horizontal). However, other cutting angles can be used to produce surfaces at different angles with respect to the housing back 14.

An example embodiment of a thickness reduction of a side wall template is shown in FIG. 11, with horizontal thickness at the top of the side wall template 42 being reduced from a thickness of D₁ to a thickness of D₂, resulting in a reduction in thickness of D₃. In some embodiments, a side wall template such as 42/42' can vary in thickness (e.g., D₁) between a thickness as low as 1.0 mm, or 1.3 mm, or 1.5 mm, or 1.7 mm, or 2.0 mm, and as high as 7 mm. In some embodiments, a side wall after machining can vary in thickness (e.g., D₂) between as a thickness as low as 0.4 mm, or 0.5 mm, or 0.6 mm, and as high as 7 mm. An example embodiment of a thickness reduction of a side wall template is shown in FIG. 12, with vertical thickness at a location of the back template at the top of the side wall template 42 being reduced from a thickness of D₄ to a thickness of D₅, resulting in a reduction in thickness of D₆. In some embodiments, a back template template such as 14/14' (FIG. 12) can vary in thickness between a thickness as low as 1.0 mm, or 1.3 mm, or 1.5 mm, or 1.7 mm, or 2.0 mm, and as high as 4 mm. In some embodiments, a back after machining can vary in thickness between as a thickness as low as 0.4 mm, or 0.5 mm, or 0.6 mm, and as high as 4 mm.

Machining of the side wall template 42/42' can provide side wall and back wall structures with wide variations. For example, in some embodiments, a side wall after machining can have a thickness at a location along the side wall of at least 5.0 mm, or at least 5.5 mm, or at least 5.7 mm, or at least 6.0 mm, or at least 6.3 mm , or at least 6.6 mm (i.e., a maximum thickness of at least 5.0 mm, or at least 5.5 mm, or at least 5.7 mm, or at least 6.0 mm, or at least 6.3 mm , or at least 6.6 mm), and can have another thickness at the same or proximate location or a different location along the side wall of less than or equal to 0.4 mm, or less than or equal to 0.5 mm, or less than or equal to or 0.6 mm. In some embodiments, a back wall after machining can have a thickness at a location along the side wall of at least 2.7 mm, or at least 3.0 mm, or at least 3.3, or at least 3.6 mm (i.e., a maximum thickness of at least 2.7 mm, or at least 3.0 mm, or at least 3.3, or at least 3.6 mm), and can have another thickness at the same or proximate location or a different location along the side wall of less than or equal to 0.4 mm, or less than or equal to 0.5 mm, or less than or equal to or 0.6 mm.

A reduction in thickness can also be expressed as a percentage reduction based on an original thickness of the side wall template before machining. In some embodiments, thickness is reduced by at least 5% at a location along the side wall template. In some embodiments, thickness is reduced by at least 10% at a location along the side wall template. In some embodiments, thickness is reduced by at least 15% at a location along the side wall template. In some embodiments, thickness is reduced by at least 20% at a location along the side wall template. In some embodiments, thickness is reduced by at least 25% at a location along the side wall template. In some embodiments, thickness is reduced by at least 30% at a location along the side wall template. In some embodiments, thickness is reduced by at least 35% at a location along the side wall template. In some embodiments, thickness is reduced by at least 40% at a location along the side wall template. In some embodiments, thickness is reduced by at least 45% at a location along the side wall template. In some embodiments, thickness is reduced by at least 50% at a location along the side wall template. In some embodiments, thickness is reduced by at least 55% at a location along the side wall template. In some embodiments, thickness is reduced by at least 60% at a location along the side wall template. In some embodiments, thickness is reduced by at least 65% at a location along the side wall template. In some embodiments, thickness is reduced by at least 70% at a location along the side wall template. In some embodiments, thickness is reduced by at least 75% at a location along the side wall template. In some embodiments, thickness is reduced by at least 80% at a location along the side wall template. In some embodiments, thickness is reduced by at least 85% at a location along the side wall template. In some embodiments, thickness is reduced by at least 90% at a location along the side wall template. In some embodiments, thickness is reduced by at least 95% at a location along the side wall template.

Although the above disclosure has been with respect to an example embodiment of an electronic device, it can be applied to the fabrication of any housing such as a tabular-shaped housing for the display of art or documents. Accordingly, in some embodiments, a side wall of a housing including a housing back and a side wall is formed by injection molding a thermoplastic polymer composition to form a side wall template. The side wall template includes a thickness at a location on the side wall template, along a direction perpendicular to a direction of extension of the side wall, of less than or equal to 7 mm. The side wall is formed by removing a portion of the side wall template to reduce thickness at a location along the side wall template by at least 5 %. In some embodiments, thickness is reduced by at least 10% at a location along the side wall template. In some embodiments, thickness is reduced by at least 15% at a location along the side wall template. In some embodiments, thickness is reduced by at least 20% at a location along the side wall template. In some embodiments, thickness is reduced by at least 25% at a location along the side wall template. In some embodiments, thickness is reduced by at least 30% at a location along the side wall template. In some embodiments, thickness is reduced by at least 35% at a location along the side wall template. In some embodiments, thickness is reduced by at least 40% at a location along the side wall template. In some embodiments, thickness is reduced by at least 45% at a location along the side wall template. In some embodiments, thickness is reduced by at least 50% at a location along the side wall template. In some embodiments, thickness is reduced by at least 55% at a location along the side wall template. In some embodiments, thickness is reduced by at least 60% at a location along the side wall template. In some embodiments, thickness is reduced by at least 65% at a location along the side wall template. In some embodiments, thickness is reduced by at least 70% at a location along the side wall template. In some embodiments, thickness is reduced by at least 75% at a location along the side wall template. In some embodiments, thickness is reduced by at least 80% at a location along the side wall template. In some embodiments, thickness is reduced by at least 85% at a location along the side wall template. In some embodiments, thickness is reduced by at least 90% at a location along the side wall template. In some embodiments, thickness is reduced by at least 95% at a location along the side wall template. The thickness parameters discussed above with respect to FIG. 9 can also be applied to housings for applications other than portable or handheld electronic devices.

Although this disclosure is not bound by any particular theory of operation, it is believed that injection molding of the relatively thin structures described herein as larger structures followed by material removal can promote formation of beneficial structures in the molded material. Compared to conventional molding approaches in which the structure is molded as close as possible to the final shape followed by a final machining of a limited amount of material to meet a tight tolerance, the embodiments disclosed utilize larger mold cavities to promote beneficial structural properties of the final molded part (e.g., flexural strength, impact resistance), including but not limited to longer fibers or better fiber alignment, followed by a significant removal of material to achieve a final part profile.

This disclosure further encompasses the following numbered Aspects.
Aspect 1. A method of making a housing, the method comprising:
   forming an open housing comprising a back and a side wall, including:
   injection molding a thermoplastic polymer composition to form an injection molded side wall template with a first thickness at a location along the side wall of less than 7 mm; or
   injection molding a thermoplastic polymer composition to form an injection molded back template with a second thickness at a location along the back; or
   injection molding a thermoplastic polymer composition to form an injection molded side wall template with a first thickness at a location along the side wall of less than 7 mm, and to form an injection molded back template with a second thickness at a location along the back of less than 4 mm; and
   removing a portion of the side wall template to reduce the first thickness by at least 5%, or removing a portion of the back template to reduce the second thickness by at least 5%, or removing a portion of the side wall template and the back template to reduce each of the first thickness and the second thickness by at least 5%.
Aspect 2. The method of Aspect 1, further comprising
   disposing an electronic component in the housing; and
   engaging a cover with the side wall to enclose the electronic component in the housing.
Aspect 3. A method of making a portable electronic device, comprising:
   forming an open housing comprising a back and a side wall, including injection molding a thermoplastic polymer composition to form a side wall template, or to form a back template, or to form both a side wall template and a back template;
   removing a portion of the side wall template to form the side wall, or removing a portion of the back template to form the back, or removing a portion of the side wall template to form the side wall and removing a portion of the back template to form the back, thereby reducing a first thickness of the side wall template at a location along the side wall template, or reducing a second thickness at a location on the back template;
   disposing an electronic component in the open housing; and
   engaging a cover with the side wall to enclose the electronic component in the housing.
Aspect 4. The method of any preceding Aspect, wherein the side wall template thickness varies at different locations of the housing between as low as 1.5 mm and as high as 7 mm through the side wall template, or wherein the back wall template thickness varies at different locations of the housing between as low as 1.5 mm and as high as 4 mm through the back wall template, or wherein the side wall template thickness varies at different locations of the housing between as low as 1.5 mm and as high as 7 mm through the side wall template and the back wall template thickness varies at different locations of the housing between as low as 1.5 mm and as high as 4 mm through the back wall template.
Aspect 5. The method of any preceding Aspect, wherein the side wall thickness varies at different locations of the housing between as low as 0.5 mm and as high as 7 mm through the side wall, or wherein the back wall thickness varies at different locations of the housing between as low as 0.5 mm and as high as 4 mm through the back wall, or wherein the side wall thickness varies at different locations of the housing between as low as 0.5 mm and as high as 7 mm through the side wall and the back wall thickness varies at different locations of the housing between as low as 0.5 mm and as high as 4 mm through the back wall.
Aspect 6. The method of any preceding Aspect, wherein the side wall has a maximum thickness of at least 6.3 mm and a minimum thickness of less than or equal to 0.5 mm, or wherein the back wall has a maximum thickness of at least 3.3 mm and a minimum thickness of less than or equal to 0.5 mm, or wherein the side wall has a maximum thickness of at least 6.3 mm and a minimum thickness of less than or equal to 0.5 mm and the back wall has a maximum thickness of at least 3.3 mm and a minimum thickness of less than or equal to 0.5 mm.
Aspect 7. The method of any preceding Aspect, wherein the first thickness is reduced by at least 5%, or the second thickness is reduced by at least 5%, the first thickness and the second thickness are each reduced by at least 5 %.
Aspect 8. The method of any preceding Aspect, wherein the first thickness is reduced by at least 50%, or the second thickness is reduced by at least 50%, the first thickness and the second thickness are each reduced by at least 50 %.
Aspect 9. The method of any preceding Aspect, wherein the first thickness is reduced by at least 95%, or the second thickness is reduced by at least 95%, the first thickness and the second thickness are each reduced by at least 95 %.
Aspect 10. The method of any preceding Aspect, wherein the thermoplastic polymer composition includes a fiber filler.
Aspect 11. The method of any of Aspects 1-10, wherein forming the housing includes injection molding the back and side wall template as a unitary molded structure.
Aspect 12. The method of any of Aspects 1-10, wherein forming the housing includes forming the back by injection molding or composite lamination, disposing the back in a mold, and introducing a fluid thermoplastic composition into the mold to form the side wall template attached to the back.
Aspect 13. The method of any preceding Aspect, further comprising disposing a metal or composite outer rim in a mold, and introducing a fluid thermoplastic composition into the mold to form the side wall template including the outer rim.
Aspect 14. The method of any preceding Aspect, including injection molding the side wall template and reducing the first thickness.
Aspect 15. The method of any preceding Aspect, including injection molding the back template and reducing the second thickness

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A method of making a housing, the method comprising:
forming an open housing comprising a back and a side wall, including:
injection molding a thermoplastic polymer composition to form an injection molded side wall template with a first thickness at a location along the side wall of less than 7 mm; or
injection molding a thermoplastic polymer composition to form an injection molded back template with a second thickness at a location along the back; or
injection molding a thermoplastic polymer composition to form an injection molded side wall template with a first thickness at a location along the side wall of less than 7 mm, and to form an injection molded back template with a second thickness at a location along the back of less than 4 mm; and
removing a portion of the side wall template to reduce the first thickness by at least 5%, or removing a portion of the back template to reduce the second thickness by at least 5%, or removing a portion of the side wall template and the back template to reduce each of the first thickness and the second thickness by at least 5%.

2. The method of Claim 1, further comprising
disposing an electronic component in the housing; and
engaging a cover with the side wall to enclose the electronic component in the housing.

3. A method of making a portable electronic device, comprising:
forming an open housing comprising a back and a side wall, including injection molding a thermoplastic polymer composition to form a side wall template, or to form a back template, or to form both a side wall template and a back template;
removing a portion of the side wall template to form the side wall, or removing a portion of the back template to form the back, or removing a portion of the side wall template to form the side wall and removing a portion of the back template to form the back, thereby reducing a first thickness of the side wall template at a location along the side wall template, or reducing a second thickness at a location on the back template;
disposing an electronic component in the open housing; and
engaging a cover with the side wall to enclose the electronic component in the housing.

4. The method of any preceding Claim, wherein the side wall template thickness varies at different locations of the housing between as low as 1.5 mm and as high as 7 mm through the side wall template, or wherein the back wall template thickness varies at different locations of the housing between as low as 1.5 mm and as high as 4 mm through the back wall template, or wherein the side wall template thickness varies at different locations of the housing between as low as 1.5 mm and as high as 7 mm through the side wall template and the back wall template thickness varies at different locations of the housing between as low as 1.5 mm and as high as 4 mm through the back wall template.

5. The method of any preceding Claim, wherein the side wall thickness varies at different locations of the housing between as low as 0.5 mm and as high as 7 mm through the side wall, or wherein the back wall thickness varies at different locations of the housing between as low as 0.5 mm and as high as 4 mm through the back wall, or wherein the side wall thickness varies at different locations of the housing between as low as 0.5 mm and as high as 7 mm through the side wall and the back wall thickness varies at different locations of the housing between as low as 0.5 mm and as high as 4 mm through the back wall.

6. The method of any preceding Claim, wherein the side wall has a maximum thickness of at least 6.3 mm and a minimum thickness of less than or equal to 0.5 mm, or wherein the back wall has a maximum thickness of at least 3.3 mm and a minimum thickness of less than or equal to 0.5 mm, or wherein the side wall has a maximum thickness of at least 6.3 mm and a minimum thickness of less than or equal to 0.5 mm and the back wall has a maximum thickness of at least 3.3 mm and a minimum thickness of less than or equal to 0.5 mm.

7. The method of any preceding Claim, wherein the first thickness is reduced by at least 5%, or the second thickness is reduced by at least 5%, the first thickness and the second thickness are each reduced by at least 5 %.

8. The method of any preceding Claim, wherein the first thickness is reduced by at least 50%, or the second thickness is reduced by at least 50%, the first thickness and the second thickness are each reduced by at least 50 %.

9. The method of any preceding Claim, wherein the first thickness is reduced by at least 95%, or the second thickness is reduced by at least 95%, the first thickness and the second thickness are each reduced by at least 95 %.

10. The method of any preceding Claim, wherein the thermoplastic polymer composition includes a fiber filler.

11. The method of any of Claims 1-10, wherein forming the housing includes injection molding the back and side wall template as a unitary molded structure.

12. The method of any of Claims 1-10, wherein forming the housing includes forming the back by injection molding or composite lamination, disposing the back in a mold, and introducing a fluid thermoplastic composition into the mold to form the side wall template attached to the back.

13. The method of any preceding Claim, further comprising disposing a metal or composite outer rim in a mold, and introducing a fluid thermoplastic composition into the mold to form the side wall template including the outer rim.

14. The method of any preceding Claim, including injection molding the side wall template and reducing the first thickness.

15. The method of any preceding Claim, including injection molding the back template and reducing the second thickness
